# EUROPÄISCHE PATENTANMELDUNG

(11) **EP 2 787 260 A1**
(43) Veröffentlichungstag der Anmeldung: **08.10.2014**
(21) Anmeldenummer: 14174458.1
(22) Anmeldetag: 29.12.2009
(51) Int. Cl.: F16K 21/02, F16K 27/10, E03B 7/07, E03B 7/04, E03B 7/09, E03C 1/02, F24D 17/00

(54) **Armatur**

(30) Priorität: 08.01.2009 DE 202009000180 U
(62) Teilanmeldung aus: 09016102.7
(71) Anmelder: Gebr. Kemper GmbH + Co. KG Metallwerke, 57462 Olpe (DE)
(72) Erfinder: Blumenthal, Roland, 50374 Erftstadt (DE); Fries, Stefan, 57462 Olpe (DE)
(74) Vertreter: Grünecker, Kinkeldey, Stockmair & Schwanhäusser

(57) **Zusammenfassung**

Die vorliegende Erfindung betrifft eine Armatur (1) zum Ausleiten von Trink- oder Brauchwasser aus einer Versorgungsleitung an einen Verbraucher mit einem Einlass (2) und einem Auslass (3) und einem dazwischenliegenden Rohrabschnitt (4) mit einer Ausfädelöffnung (5) und einen von dem Rohrabschnitt (4) abgehenden, mit der Ausfädelöffnung (5) kommunizierenden und mit einem Ventil (6; 31) verschließbaren Leitungsabschnitt (7), welcher in Strömungsrichtung auf der der Versorgungsleitung abgewandten Seite des Ventils (6; 31) Anschlussmittel (8) für den Anschluss einer Auslaufarmatur, insbesondere für einen Waschtisch ausbildet. Der vorliegenden Erfindung liegt das Problem zugrunde, eine Armatur zum Ausleiten von Trink- oder Brauchwasser aus einer Versorgungsleitung an einen Verbraucher anzugeben, mit der eine Keimbildung in einer von einer Trink- oder Brauchwasserversorgungsleitung abgehenden und zu einer Auslaufarmatur führenden Leitung vermieden wird. Das vorgenannte Problem wird durch Weiterbildung des Rohrabschnitts (4) der vorliegenden Armatur (1) gelöst, wobei der Rohrabschnitt (4) einen in Hauptströmungsrichtung der Versorgungsleitung der Ausfädelöffnung (5) nachgeordnete Querschnittsverengung (9) und eine dieser in Hauptströmungsrichtung nachgelagerte Einfädelöffnung (10) umfasst.

## Beschreibung

Die vorliegende Erfindung betrifft eine Armatur zum Ausleiten von Trink- oder Brauchwasser aus einer Versorgungsleitung an einen Verbraucher mit einem Einlass und einen Auslass und einen dazwischenliegenden Rohrabschnitt mit einer Ein- und Ausfädelöffnung und einem von dem Rohrabschnitt abgehenden, mit der Ein- und Ausfädelöffnung kommunizierenden und mit einem Ventil verschließbaren Leitungsabschnitt, welcher in Hauptströmungsrichtung auf der der Versorgungsleitung abgewandten Seite des Ventils Anschlussmittel für den Anschluss einer Auslaufarmatur, insbesondere einer Auslaufarmatur eines Waschtisches ausbildet.

Eine im Sinne der Erfindung verstandene Trink- oder Brauchwasserversorgungsleitung findet im Allgemeinen in einem Trink- oder Brauchwassersystem Anwendung, das ein zur Bereitstellung von Trink- oder Brauchwasser vorgesehenes Leitungsnetz ist. Solch ein Trink- oder Brauchwassersystem kann üblicherweise in Wohngebäuden oder öffentlichen Einrichtungen wie beispielsweise Krankenhäuser und Hotels installiert sein. Dabei weist die Trink- oder Brauchwasserversorgungsleitung wenigstens eine zur Entnahme von Trink- oder Brauchwasser geeignete Wasserentnahmestelle wie eine Auslaufarmatur, insbesondere eine Auslaufarmatur eines Waschtisch auf, der im Allgemeinen über einen außenwandseitigen Anschluss an die Trink- oder Brauchwasserversorgungsleitung angeschlossen ist. Solch ein Anschluss wird üblicherweise über ein absperrbares Eckventil realisiert.

Solch ein Eckventil umfasst einen an die meist unter Putz installierte Versorgungsleitung angeschlossenen und einen Versorgungsleitungsabschnitt ausbildenden Rohrabschnitt mit einer Ausfädelöffnung zum Ausleiten des Trink- oder Brauchwassers. Von dem Rohrabschnitt ragt ein Leitungsabschnitt ab, der wandaußenseitig Anschlussmittel, in der Regel in Form eines Außengewindes mit Dichtsitz für die anzuschließende Leitung, zum Anschluss der Wasserentnahmestelle, wie den Waschtisch, über eine entsprechende Verbindungsleitung aufweist. Die Armatur weist einen Strömungskanal auf, in welchem eine Strömung lediglich bei Wasserentnahme über die Wasserentnahmestelle erzeugt wird.

Somit herrscht in dem an die Versorgungsleitung angeschlossenem Teil der Armatur und in der von der Armatur zu dem Verbraucher (Waschtisch) verlaufenden Verbindungsleitung keine Spülströmung, wenn keine Wasserentnahme stattfindet. Dies kann zu dem Problem einer Stagnation des in der Armatur und in der Verbindungsleitung befindlichen Trink- oder Brauchwassers führen und damit verbunden entweder zu einer Abkühlung dieses Wassers bei einem Warmwasseranschluss und der Gefahr einer Legionellenbildung oder zu einer Erwärmung des Wassers bei einem Kaltwasseranschluss und damit zu einer vermehrten Bildung von Pseudomonaden. Beide Arten der Keimbildung sind jedoch aus Hygienegründen zu vermeiden.

Der vorliegenden Erfindung liegt das Problem zugrunde, eine Armatur zum Ausleiten von Trink- oder Brauchwasser aus einer Versorgungsleitung an einen Verbraucher anzugeben, mit der eine Keimbildung in einer von einer Trink- oder Brauchwasserversorgungsleitung abgehenden und zu einer Auslaufarmatur führenden Leitung vermieden wird, und eine Trink- oder Brauchwasserversorgungsleitung bereitzustellen, welche eine solche Armatur verwendet.

Zur Lösung des Problems wird mit der vorliegenden Erfindung eine Armatur zum Ausleiten von Trink- oder Brauchwasser aus einer Trink- oder Brauchwasserversorgungsleitung an einen Verbraucher mit den Merkmalen von Anspruch 1 vorgeschlagen.

Die erfindungsgemäße Armatur zeichnet sich gegenüber bisher bekannten Armaturen durch einen Rohrabschnitt aus, der eine in Hauptströmungsrichtung der Versorgungsleitung der Ausfädelöffnung nachgeordnete Querschnittsverengung und eine in einem Bereich der Querschnittsverengung angeordnete und/oder dieser in Hauptströmungsrichtung nachgelagerten Einfädelöffnung umfasst. Im Sinne der vorliegenden Erfindung wird unter der Hauptströmungsrichtung diejenige Strömungsrichtung verstanden, die in dem die Versorgungsleitung ausbildenden Rohrabschnitt vorherrscht. Mit der erfindungsgemäßen Armatur kann eine Spülströmung erzeugt werden, die eine Keimbildung des in der erfindungsgemäßen Armatur und in der daran zu der Auslaufarmatur führenden Verbindungsleitung befindlichen Trink- oder Brauchwassers weitestgehend verhindert. Einerseits kann die Spülströmung durch eine Druckdifferenz aufgrund einer solchen Anordnung von Ausfädel- und Einfädelöffnung mit der dazwischenliegenden Querschnittsverengung bewirkt werden, so dass eine Strömung in einem an dem Rohrabschnitt über die Ausfädel- und Einfädelöffnung strömungsmäßig verbundenen Leitungsabschnitt der erfindungsgemäßen Armatur erzeugt wird, auch wenn keine Wasserentnahme über die an die Armatur angeschlossene Auslaufarmatur erfolgt.

Die erfindungsgemäße Armatur wirkt dabei als Strömungsteiler, welcher über die Ausfädelöffnung einen vorbestimmten Volumenstrom aus der Versorgungsleitung ausleitet und aufgrund der Querschnittsverengung eine in einem Bereich der Querschnittsverengung angeordnete und/oder dieser in Hauptströmungsrichtung nachgelagerten Einfädelöffnung eine Druckdifferenz erzeugt, die zu einer Durchspülung der erfindungsgemäßen Armatur und der von der Armatur zu der Auslaufarmatur führenden Verbindungsleitung sorgt, wobei der über die Ausfädelöffnung ausgeleitete Volumenstrom über die Einfädelöffnung in die Versorgungsleitung zurückgeführt wird. Mit der erfindungsgemäßen Armatur kann die von der Trink- oder Brauchwasserversorgungsleitung zur Auslaufarmatur verlaufende Leitung auf Basis eines durch die erfindungsgemäße Armatur erzeugten Differenzdruckes sicher durchspült werden, auch wenn keine Wasserentnahme an der Auslaufarmatur erfolgt. Einer Keimbildung in dem Leitungsabschnitt zwischen Versorgungsleitung und Auslaufarmatur kann somit erfolgreich begegnet werden.

Bevorzugte Ausführungsformen der vorliegenden Erfindung werden mit den Unteransprüchen angegeben.

In einer bevorzugten Ausgestaltung der vorliegenden Erfindung weist der Leitungsabschnitt eine Rohr-in-Rohr-Konfiguration mit einem als Inliner ausgebildeten Innenrohr auf, welcher beispielsweise der Ausfädelöffnung strömungsmäßig zugeordnet ist, wodurch der Anschluss der Auslaufarmatur über ein einziges Anschlussmittel möglich ist. Das Innenrohr kann alternativ auch der Einfädelöffnung zugeordnet sein.

Nach einer weiteren bevorzugten Ausgestaltung der vorliegenden Erfindung sind die Ausfädel- und Einfädelöffnung derart ausgebildet, dass die Strömung aus dem mit der Versorgungsleitung verbundenen Rohrabschnitt im Wesentlichen unter einem Winkel von 90° in den Leitungsabschnitt ausgeleitet bzw. eingeleitet wird. Die Aus- und Einfädelöffnungen sind auf einfache Weise in dem Rohrabschnitt ausbildbar.

Gemäß einer weiteren bevorzugten Ausgestaltung umfasst der Leitungsabschnitt einen mit dem Rohrabschnitt verbundenen ersten Teil, der auf der dem Rohrabschnitt zugewandten Seite eine erste mit der Ausfädelöffnung und eine zweite mit der Einfädelöffnung kommunizierende Durchflussbohrung aufweist, die ausgehend von der Ausfädel- und der Einfädelöffnung voneinander getrennt in den Leitungsabschnitt verlaufen und in einer in einem an den ersten Teil anschließenden zweiten Teil des Leitungsabschnittes ausgebildete Bohrung enden. Vorzugsweise umfasst der Leitungsabschnitt eine von dem Rohrabschnitt wegführende, sich im wesentlichen stufenartig erweiternde Durchflussbohrung, die einen die erste Durchflussbohrung ausmachenden ersten Durchflussbohrungsabschnitt und wenigstens einen sich daran anschließenden ersten erweiterten und danach folgenden zweiten erweiterten Durchflussbohrungsabschnitt aufweist. Besonders bevorzugt weist der Leitungsabschnitt zwischen dem Rohrabschnitt und dem zweiten erweiterten Durchflussbohrungsabschnitt eine Vielzahl an den ersten Durchflussbohrungsabschnitt und den ersten erweiterten Durchflussbohrungsabschnitt umgebende zweite Durchflussbohrungen auf, die in einem zwischen der Einfädelöffnung und dem Rohrabschnitt nahen Ende des Leitungsabschnittes ausgebildeten Ringkanal enden, der mit der Einfädelöffnung strömungsmäßig verbunden ist. Der Leitungsabschnitt kann mit kleinerem Querschnitt unter Beibehaltung einer aus bzw. in den Rohrabschnitt geleiteten Strömungsvolumenmenge ausgebildet werden.

In einer weiteren bevorzugten Ausgestaltung der vorliegenden Erfindung ist das Ventil schaftförmig ausgebildet und weist einen von dem Ventilschaft im wesentlichen senkrecht abragenden, in dem Bereich des zweiten erweiterten Durchflussbohrungsabschnitts angeordneten Kragen auf, wobei der Schaft einen zu dem Innendurchmesser des ersten erweiterten Durchflussbohrungsabschnitts korrespondierenden Außendurchmesser und der Kragen einen zu dem Innendurchmesser des zweiten erweiterten Durchflussbohrungsabschnitts korrespondierenden Außendurchmesser hat. Die ersten und zweiten Durchflussbohrungen sind mit nur einem Ventil absperrbar, wobei das dem Rohrabschnitt nahe Ende des Ventils die erste Durchflussbohrung und die dem Kragen zugeordnete, radial von dem Schaft abragende Fläche die wenigstens eine oder die Vielzahl an zweiten Durchflussbohrungen absperrt. Vorzugsweise ist das Ventil über ein mit dem Ventil in Eingriff stehendes Ventil-Bedienelement in der Durchflussbohrung axial verschieblich, wobei das Ventil-Bedienelement eine außerhalb der Durchflussbohrung angeordnete Einstellvorrichtung hat, mit Hilfe welcher das Ventil wahlweise von einer Offenstellung in eine Verschlussstellung oder umgekehrt verschiebbar ist. Die Armatur ist somit auf einfache Weise beispielsweise bei Reparatur oder Austausch der Auslaufarmatur absperrbar. Des Weiteren kann die durch den Leitungsabschnitt durchgeleitete Strömungsvolumenmenge reguliert werden.

Nach einer weiteren bevorzugten Ausgestaltung der vorliegenden Erfindung ist das Anschlussmittel ein von dem Leitungsabschnitt senkrecht abragender Anschlussstutzen, der einen ersten Kanal, der mit dem ersten erweiterten Durchflussbohrungsabschnitt kommuniziert, und einen zweiten Kanal aufweist, der mit dem zweiten erweiterten Durchflussbohrungsabschnitt kommuniziert. Besonders bevorzugt umfasst die Armatur des Weiteren eine an den Anschlussstutzen angeschlossene, zur Auslaufarmatur führende Verbindungsleitung, die als Inliner ausgebildet ist, wobei die Inlinerrohrleitung von dem ersten Kanal aufgenommen ist. Der Anschluss sowie die Verbindungsleitung können mit geringer Größe ausgebildet werden.

Gemäß einer weiteren bevorzugten Ausgestaltung der vorliegenden Erfindung ist der Rohrabschnitt mit dem Leitungsabschnitt und dem in dem Leitungsabschnitt aufgenommenen Ventil modular zusammensetzbar, wobei der Rohrabschnitt einen das eine Ende des Leitungsabschnittes aufnehmenden Anschlussstutzen umfasst. Die modulare Bauweise wird vorzugsweise mittels Schraub- oder Steckverbindung erreicht, wobei das Ventil in den Leitungsabschnitt geschraubt oder gesteckt ist und der Leitungsabschnitt über den Rohrabschnittseitigen Anschlussstutzen mit dem Rohrabschnitt verbunden ist. Die modulare Bauweise erlaubt beispielsweise im Falle einer Reparatur den einfachen Austausch des beschädigten Teils der Armatur.

In einer weiteren bevorzugten Ausgestaltung der vorliegenden Erfindung sind die erste und zweite Durchflussbohrung in einem ersten, von dem Rohrabschnitt abgehenden Teil des Leitungsabschnittes zueinander parallel und besonders bevorzugt zueinander symmetrisch und in einem zweiten, sich dem ersten Teil anschließenden und zu diesem senkrecht verlaufenden zweiten Teil des Leitungsabschnittes vorzugsweise spitz zusammenlaufend ausgebildet. Die erfindungsgemäße Armatur ist dadurch mit geringerer Größe ausbildbar.

Gemäß einer weiteren bevorzugten Ausgestaltung der vorliegenden Erfindung umfasst der Leitungsabschnitt einen an den ersten Teil anschließenden und dem Rohrabschnitt gegenüberliegenden Ventilaufnahme-Endabschnitt zur Aufnahme des Ventils, das vorzugsweise als ein Doppelabsperrventil ausgebildet ist. Das Doppelabsperrventil umfasst vorzugsweise jeweils ein in die erste und zweite Durchflussbohrung hineinragendes über das Ventil-Bedienelement verschieblich geführtes Ventilelement. Besonders bevorzugt ist die erste und zweite Durchflussbohrung in Richtung des Ventilaufnahme-Endabschnitts offen ausgebildet. Weiterhin bevorzugt ragen die jeweiligen Ventilelemente in die jeweilige Öffnung hinein. Vorzugsweise sind die Ventilelemente auf der dem Rohrabschnitt abgewandten Seite mit einer den Ventilaufnahme-Endabschnitt verschließenden und koaxial dazu verschieblichen Platte verbunden, die eine Spindelführung aufweist, die mit einem in die Spindelführung hineinragenden Spindelabschnitt des Ventil-Bedienelementes derart zusammenwirkt, dass die Ventilelemente über eine Drehbewegung eines dem Ventil-Bedienelement zugeordneten Drehteils axial verschiebbar sind. Besonders bevorzugt nimmt der Ventilaufnahme-Endabschnitt auf der dem Rohrabschnitt gegenüberliegenden Seite ein den Ventilaufnahme-Endabschnitt verschließendes Deckelelement auf, welches eine mittige Bohrung umfasst, durch das ein nach außen führendes Kopfteil des Drehteils ragt, wobei das Kopfteil mit einem den Spindelabschnitt aufnehmenden Schaftteil verbunden ist, um das Doppelabsperrventil von außerhalb des Leitungsabschnittes bedienbar zu betätigen. Das Doppelabsperrventil ist somit aus mehreren modular verbindbaren Elementen ausgebildet. Somit kann das Doppelabsperrventil modular in den Leitungsabschnitt eingesetzt werden. Ferner können die Ventilelemente oder die Platte im Fall einer Beschädigung einzeln ausgetauscht werden, ohne dass das Doppelabsperrventil vollständig zu ersetzen wäre.

Nach einer weiteren bevorzugten Ausgestaltung der vorliegenden Erfindung werden das Schaftteil und das Kopfteil über einen von dem Schaft- oder Kopfteil radial abragenden Kragen voneinander getrennt, wobei der Kragen einen die Bohrung überragenden Außendurchmesser aufweist und mit der der Schaftteil abgewandten Fläche an einer innenseitigen Fläche des Deckelelementes anliegt. Besonders bevorzugt weist das Kopfteil eine ringförmige Aussparung zur Aufnahme eines Sicherungselementes auf, welcher an der außenseitigen Fläche des Deckelelementes zur Anlage kommt. Dadurch kann das Ventil-Bedienelement auf einfache Weise axial unverschieblich an dem Deckelelement fixiert werden.

Eine weitere bevorzugte Ausgestaltung der vorliegenden Erfindung betrifft insbesondere diejenige bevorzugte und vorstehend beschriebene Armatur, die durch einen in der Querschnittsverengung angeordneten und in Hauptströmungsrichtung der Versorgungsleitung verschieblichen Verschlusskörper gekennzeichnet ist. Die Bereitstellung des Verschlusskörpers in der Querschnittsverengung ermöglicht eine verbesserte Durchspülung des Verbindungsabschnittes zwischen der Versorgungsleitung und der Auslaufarmatur, da der Verschlusskörper vorzugsweise derart ausgebildet ist, dass dieser die Querschnittsverengung bis zu einem kritischen Volumenstrom im Wesentlichen derart verschließt, dass der in der Versorgungsleitung herrschende Volumenstrom annähernd vollständig in den zu der Auslaufarmatur führenden Leitungsabschnitt der erfindungsgemäßen Armatur geleitet wird. Vorteilhafter Weise verschließt der Verschlusskörper die Querschnittsverengung bei kleinen Volumenströmen bis zu einem kritischen Volumenstrom im Wesentlichen vollständig. Unter einem kritischen Volumenstrom wird im Sinne der vorliegenden Erfindung ein solcher Volumenstrom verstanden, der ausreicht, den Verschlusskörper allein aufgrund von auf den Verschlusskörper wirkenden Reibungs- und Druckkräften in Hauptströmungsrichtung zu bewegen. Die vorgenannte Ausgestaltung hat sich in der Hinsicht als vorteilhaft erwiesen, dass bei einer zu erwartenden, geringen Druckdifferenz zwischen Ein- und Ausfädelöffnung bei Entnahme von Trink- oder Brauchwasser der in die Armatur einströmende Volumenstrom vollständig durchgeleitet wird. Somit wird auf einfache Weise sichergestellt, dass auch im Falle einer unzureichenden Druckdifferenz zwischen Ein- und Ausfädelöffnung zur Erzeugung einer Spülströmung ein Durchspülungseffekt erzielt werden kann. Mit dem Verschlusskörper lässt sich weiterhin eine Strömungsdurchtrittsfläche in einer der Querschnittsverengung in Strömungsrichtung des Rohrabschnitts nachgelagerten Querschnittserweiterung derart variabel einstellen, dass eine zwischen dem Verschlusskörper und einer Innenwandung der Querschnittserweiterung ausgebildete Durchtrittsfläche durch Verschieben des Verschlusskörpers in oder entgegen der Hauptströmungsrichtung vergrößert bzw. verkleinert werden kann. Damit lässt sich eine zu verschiedenen Volumenströmen angepasste Druckdifferenz zur Erzeugung einer Spülströmung in der Armatur auf einfache Weise erreichen. Vorzugsweise ist der Verschlusskörper querschnittlich in Strömungsrichtung des Rohrabschnittes ellipsenförmig und senkrecht dazu, also quer zu der Strömungsrichtung des Rohrabschnitts kreisförmig bzw. dem Querschnitt des Rohrabschnitts angepasst ausgebildet. Dadurch kann eine zwischen dem Verschlusskörper und der Innenwandung der Querschnittsverengung ausgebildete Kontaktfläche im Falle eines nahezu vollständigen Verschlusses vergrößert werden, um so einerseits die Dichtigkeit zwischen dem Verschlusskörper und Querschnittsverengung weiter zu verbessern und andererseits den kritischen Volumenstrom in Abhängigkeit der zwischen dem Verschlusskörper und der Innenwandung der Querschnittsverengung wirkenden Reibungskraft und der von dem Volumenstrom ausgehenden Druckkraft geeignet einzustellen.

In einer weiteren bevorzugten Ausgestaltung der vorliegenden Erfindung wirkt der Verschlusskörper mit wenigstens einer in Strömungsrichtung des Rohrabschnitts wirkenden Rückholfeder zusammen. Besonders bevorzugt liegt ein Kraftangriffspunkt der Rückholfeder an dem Verschlusskörper in einer parallel zur Strömungsrichtung des Rohrabschnitts verlaufenden Symmetrieachse des Verschlusskörpers, wobei die von der Rückholfeder ausgehende Kraft entlang der Symmetrieachse wirkt. Weiterhin bevorzugt greift an den jeweiligen in Strömungsrichtung des Rohrabschnitts liegenden Enden des Verschlusskörpers wenigstens eine Rückholfeder an, deren in Strömungsrichtung des Rohrabschnitts wirkende resultierende Kraft bei ruhendem Fluid gleich null ist.

Gemäß einer anderen bevorzugten Ausgestaltung der vorliegenden Erfindung wird eine Trink- oder Brauchwasserversorgungsleitung mit wenigstens einer Auslaufarmatur vorgeschlagen, die über eine Armatur zum Ausleiten von Trink- oder Brauchwasser nach einer der vorbeschriebenen bevorzugten Ausgestaltungen der vorliegenden Erfindung an die Versorgungsleitung angeschlossen ist.

Weitere Einzelheiten und Vorteile der vorliegenden Erfindung ergeben sich aus der nachfolgenden Beschreibung mehrerer Ausführungsbeispiele in Verbindung mit der Zeichnung. In dieser zeigen:
- Fig. 1: eine perspektivische Ansicht eines Gehäuseteils eines ersten Ausführungsbeispiels einer erfindungsgemäßen Armatur;
- Fig. 2A und 2B: Seiten- und Frontansichten des in Fig. 1 gezeigten Gehäuseteils;
- Fig. 2C: eine Querschnittsansicht entlang der Schnittlinie C-C des in Fig. 2A gezeigten Ausführungsbeispiels;
- Fig. 3A: eine Querschnittsansicht entlang der Schnittlinie A-A des ersten Ausführungsbeispiels in einer Ventil-Offenstellung;
- Fig. 3B: eine Querschnittsansicht entlang der Schnittlinie A-A des ersten Ausführungsbeispiels in einer Ventil-Verschlussstellung;
- Fig. 4A: eine Querschnittsansicht entlang der Schnittlinie B-B des ersten Ausführungsbeispiels in einer Ventil-Offenstellung;
- Fig. 4B: eine Querschnittsansicht entlang der Schnittlinie B-B des ersten Ausführungsbeispiels in einer Ventil-Verschlussstellung;
- Fig. 5A: eine Querschnittsansicht entlang der Schnittlinie A-A des ersten Ausführungsbeispiels mit Verschlusskörper in einer Ventil-Offenstellung;
- Fig. 5B: eine Querschnittsansicht entlang der Schnittlinie A-A des ersten Ausführungsbeispiels mit Verschlusskörper in einer Ventil-Verschlussstellung;
- Fig. 6A: eine Querschnittsansicht entlang der Schnittlinie B-B des ersten Ausführungsbeispiels mit Verschlusskörper in einer Ventil-Offenstellung;
- Fig. 6B: eine Querschnittsansicht entlang der Schnittlinie B-B des ersten Ausführungsbeispiels mit Verschlusskörper in einer Ventil- Verschlussstellung;
- Fig. 7: eine perspektivische Ansicht eines Gehäuseteils eines zweiten Ausführungsbeispiels einer erfindungsgemäßen Armatur;
- Fig. 8A-8C: Seiten-, Front- und Draufsichten des in Fig. 7 gezeigten Gehäuseteils;
- Fig. 9: eine Querschnittansicht entlang der Schnittlinie A-A des in Fig. 8B gezeigten Ausführungsbeispiels;
- Fig. 10: eine Querschnittansicht entlang der Schnittlinie B-B des in Fig. 8C gezeigten Ausführungsbeispiels;
- Fig. 11: eine vergrößerte Schnittansicht des in Fig. 10 gezeigten Ausführungsbeispiels;
- Fig. 12: eine Querschnittsansicht entlang der Schnittlinie A-A des in Fig. 8B gezeigten Ausführungsbeispiels mit Verschlusskörper;
- Fig. 13 und 14: Querschnittsansichten des in Fig. 12 gezeigten Ausführungsbeispiels mit ausgelenktem Verschlusskörper; und
- Fig. 15: ein schematische Darstellung eines Anschlussbeispiels für den Anschluss der erfindungsgemäßen Armatur an eine Trink- oder BrauchwasserVersorgungsleitung.

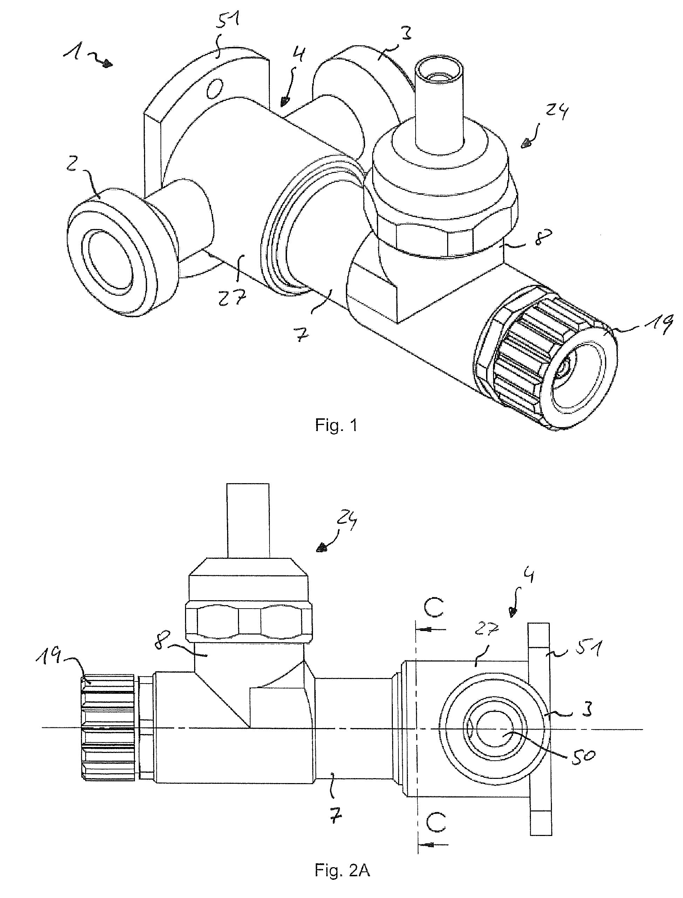

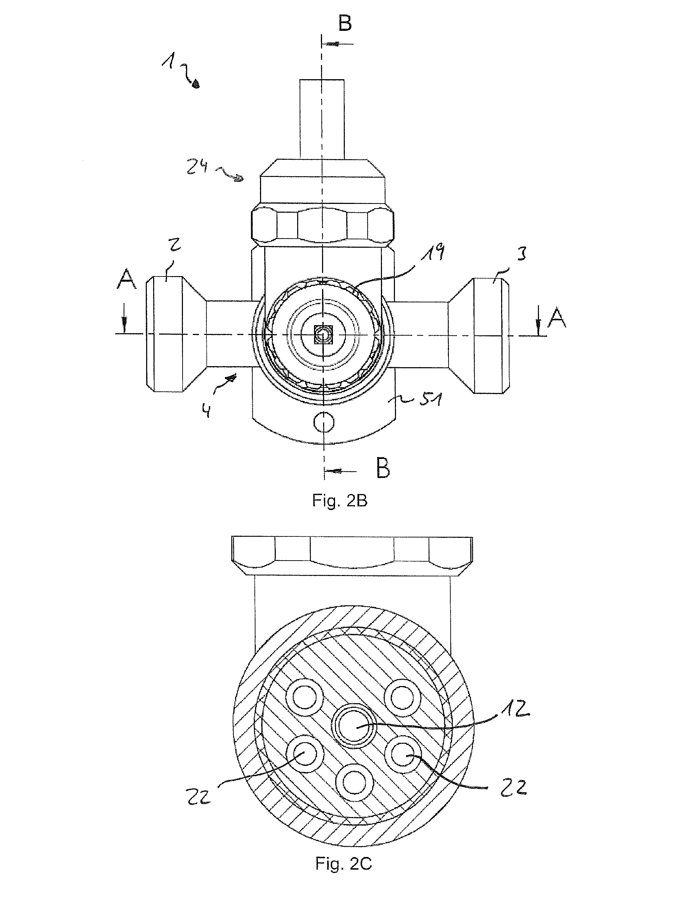

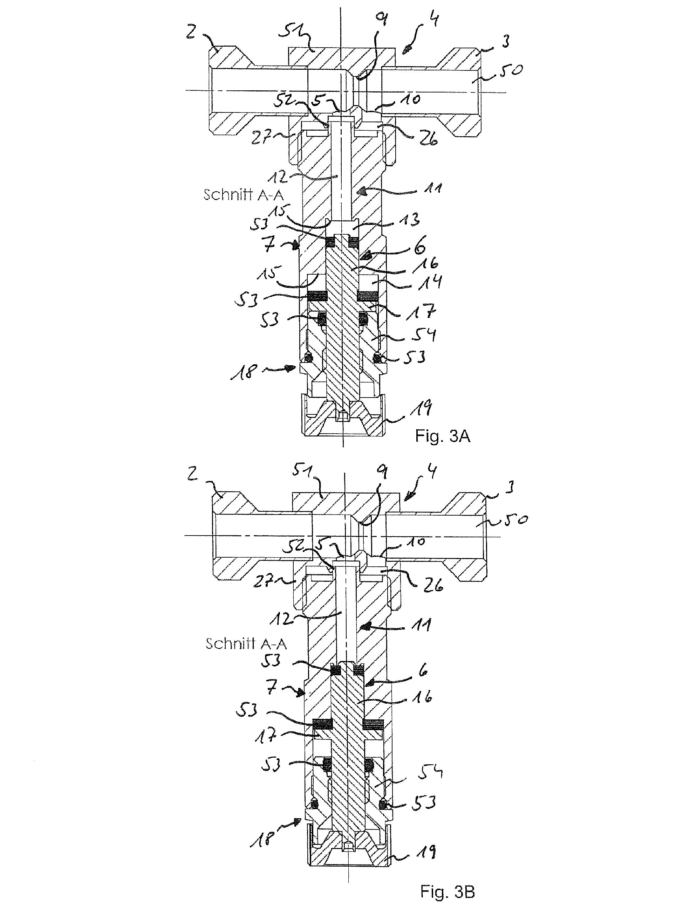

Die Fig. 1 zeigt eine perspektivische Ansicht eines Gehäuseteils eines ersten Ausführungsbeispiels einer erfindungsgemäßen Armatur. Die Fig. 2A und 2B zeigen eine Seiten- und Frontansicht des in Fig. 1 gezeigten Gehäuseteils. Die Fig. 2C zeigt eine Querschnittsansicht entlang der Schnittlinie C-C des in Fig. 2A gezeigten Ausführungsbeispiels. Die Fig. 3A bis 4B zeigen Querschnittsansichten entlang den Schnittlinien A-A und B-B des ersten Ausführungsbeispiels in einer Ventil-Offenstellung bzw. Ventil-Verschlussstellung.

Wie in den Fig. 1 bis 2C dargestellt, umfasst die erfindungsgemäße Armatur 1 nach dem ersten Ausführungsbeispiel einen Rohrabschnitt 4, der zwischen einem Einlass 2 und einem Auslass 3 der Armatur 1 angeordnet ist. Von dem Rohrabschnitt 4 geht senkrecht zur Durchlassrichtung einer zwischen dem Einlass 2 und dem Auslass 3 herrschenden Strömung ein Anschlussstutzen 27 ab, in welchem ein Ende eines Leitungsabschnittes 7 verschraubt ist. Auf der dem Anschlussstutzen 27 gegenüberliegenden Seite des Rohrabschnitts 4 ist eine Halterung 51 zum Befestigen des Rohrabschnitts 4 und damit der Armatur 1 vorgesehen. Der Rohrabschnitt 4 ist mit der Halterung 51, dem Einlass 2 und dem Auslass 3 vorzugsweise aus einem Stück ausgeformt.

Der Leitungsabschnitt 7 weist auf seinem anderen Ende einen Drehgriff 19 auf, worüber eine in dem Leitungsabschnitt 7 aufgenommene Ventilspindel 6 koaxial zu dem Leitungsabschnitt 7 verschieblich vorgesehen ist. In dem Bereich zwischen dem Drehgriff 19 und dem Anschlussstutzen 27 weist der Leitungsabschnitt 7 ein senkrecht von der Erstreckungsrichtung des Leitungsabschnitts 7 abragenden Anschluss 8 zur Aufnahme einer Verbindungsleitung 24 auf. Die Verbindungsleitung 24 ist über eine Schraubverbindung mit dem Leitungsabschnitt 7 verbunden. Eine aus einer Trink- oder Brauchwasserversorgungsleitung ausgeleitete Strömung wird über den Rohrabschnitt 4, den Leitungsabschnitt 7 und der Verbindungsleitung 24 zu der Auslaufarmatur hin- und zurückgeleitet.

Bei Anschluss der Armatur 1 an eine nicht dargestellte Trink- oder Brauchwasserversorgungsleitung bildet der Rohrabschnitt 4 einen Teil dieser Versorgungsleitung aus. Wie in den Fig. 3A bis 6B gezeigt, umfasst der Rohrabschnitt 4 einen den Einlass 2 mit dem Auslass 3 strömungsmäßig verbindenden Durchlass 50. Der Durchlass 50 bzw. der Rohrabschnitt 4 umfasst in dem Bereich des Anschlussstutzens 27 eine Querschnittsverengung 9, der beiderseitig jeweils eine die Ein- und Ausfädelöffnung ausbildende Öffnung 5, 10 vor- bzw. nachgelagert ist, wobei die Öffnungen 5, 10 je nach Strömungsrichtung H des durch den Durchlass 50 durchgeleiteten Trink- oder Brauchwassers als Ein- bzw. Ausfädelöffnung funktionieren. Im Sinne der vorliegenden Erfindung wird über die Ausfädelöffnung das Trink- oder Brauchwasser aus dem einen Teil der Versorgungsleitung ausmachenden Rohrabschnitt 4 in den Leitungsabschnitt 7 und über die Einfädelöffnung wieder in den Rohrabschnitt 4 geleitet. Mit anderen Worten ist die Ausfädelöffnung diejenige Öffnung, die in Strömungsrichtung H des Rohrabschnitts 4 der Querschnittsverengung 9 vorgelagert ist, während die Einfädelöffnung der Querschnittsverengung 9 in Strömungsrichtung H des Rohrabschnitts 4 nachgelagert ist.

Der in dem Anschlussstutzen 27 verschraubte Leitungsabschnitt 7 weist auf der dem Anschlussstutzen 27 zugeordnetem Endseite einen zentrierten Vorsprung 52 auf, der unmittelbar an die Ein- bzw. Ausfädelöffnung 5 angrenzt. Der Leitungsabschnitt 7 ist im wesentlichen mit einer zentrierten Durchflussbohrung 11 ausgebildet, die ausgehend von dem Vorsprung 52 in eine erste Durchflussbohrung 12, einem ersten erweiterten Durchflussbohrungsabschnitt 13 und einem daran anschließenden zweiten erweiterten Durchflussbohrungsabschnitt 14 gegliedert ist, wobei die einzelnen Durchflussbohrungsabschnitte 12, 13, 14 einen zueinander unterschiedlichen Innendurchmesser aufweisen, der sich ausgehend von dem Vorsprung 52 jeweils vergrößert. Der Leitungsabschnitt 7 ist derart in dem Anschlussstutzen 27 verschraubt, dass zwischen der Außenwandseite des Durchlasses 50 und dem beidseitig des Vorsprungs 52 liegenden Endfläche des Leitungsabschnitts 7 ein Ringkanal 26 ausgebildet wird, der strömungsmäßig mit der anderen Ein- bzw. Ausfädelöffnung 10 verbunden ist. Um die erste Durchflussbohrung 12 sind im wesentlichen kreisförmig mehrere zweite Durchflussbohrungen 22 angeordnet, die jeweils im Bereich des Ringkanals 26 und des zweiten erweiterten Durchflussbohrungsabschnittes 14 enden (siehe Fig. 2C).

Der erste erweiterte Durchflussbohrungsabschnitt 13 und der zweite erweiterte Durchflussbohrungsabschnitt 14 nehmen die Ventilspindel 6 verschieblich auf. Die Ventilspindel 6 ist schaftförmig ausgeformt und weist im Bereich des zweiten erweiterten Durchflussbohrungsabschnitts 14 einen radial von dem Schaft 16 abragenden Kragen 17 auf, der einen dem Innendurchmesser des zweiten erweiterten Durchflussbohrungsabschnitts 14 entsprechenden Innendurchmesser hat. Der Schaft 16 weist einen zu dem Innendurchmesser des ersten erweiterten Durchflussbohrungsabschnitts 13 korrespondieren Außendurchmesser auf. Auf der der Rohrabschnitt 4 zugewandeten Endfläche des Schaftes 16 und des Kragens 17 sind Dichtungselemente 53 angeordnet, die in einer Verschlussstellung, wie in Fig. 3B, 4B, 5B und 6B gezeigt, die ersten und zweiten Durchflussbohrungen 12, 22 durch Anlage an einer jeweils im ersten erweiterten Durchflussbohrungsabschnitt 13 und im zweiten erweiterten Durchflussbohrungsabschnitt 14 angeordneten, die erste Durchflussbohrung 12 und die erste erweiterte Durchflussbohrung 13 umgebende Anlagefläche 15 verschließen. In einer Offenstellung wird zwischen diesen Anlageflächen 15 und den jeweiligen, dem Schaft 16 und dem Kragen 17 zugeordneten Dichtungselementen 53 ein Durchflusskanal ausgebildet, über welchen eine über die Ein- bzw. Ausfädelöffnung 5, 10 geleiteter Volumenstrom durch den Anschluss 8 in die Verbindungsleitung 24 zu der Auslaufarmatur geleitet wird. Im Endbereich des zweiten erweiterten Durchflussbohrungsabschnittes 14 ist eine Ventilhalterung 54 vorgesehen, die die Ventilspindel 6 zentriert führt und lagert. Zwischen der Ventilhalterung 54 und dem Schaft 16 der Ventilspindel 6 und einer Innenwandung des zweiten erweiterten Durchflussbohrungsabschnitts 14 sind jeweils Dichtungselementen 53 angeordnet. Die Ventilhalterung 54 ragt endseitig aus dem zweiten Durchflussbohrungsabschnitt 14 heraus. Auf dem herausragenden Abschnitt der Ventilhalterung 54 ist der Drehgriff 19, beispielsweise eine Rändelmutter vorgesehen, der mit dem Rohrabschnitt 4 fernen Ende der Ventilspindel 6 fest verbunden ist, so dass bei Drehen des Drehgriffs 19 die Ventilspindel 6 in die Offenstellung bzw. in die Verschlussstellung verbringbar ist.

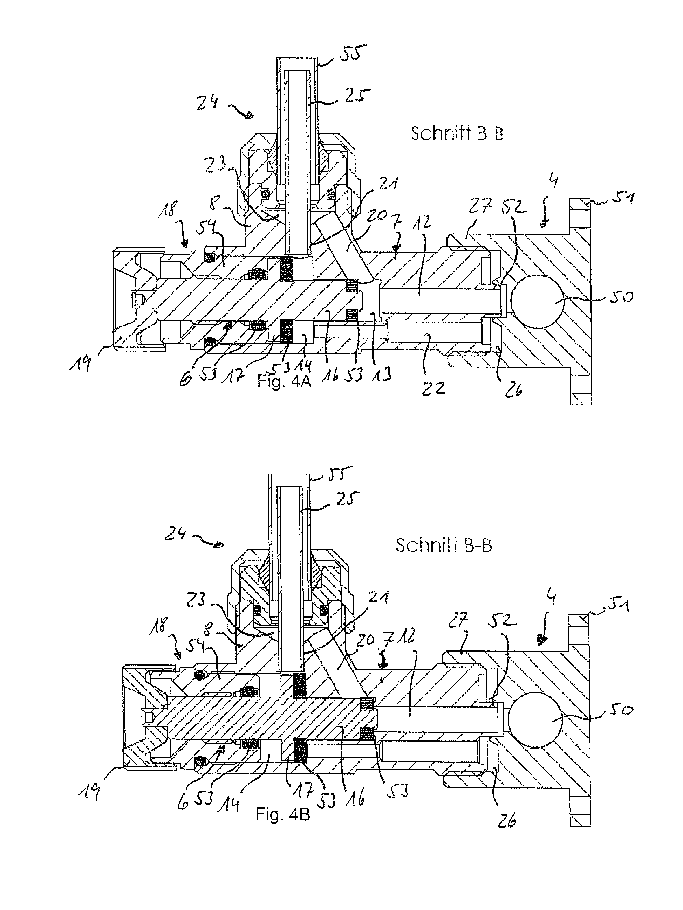

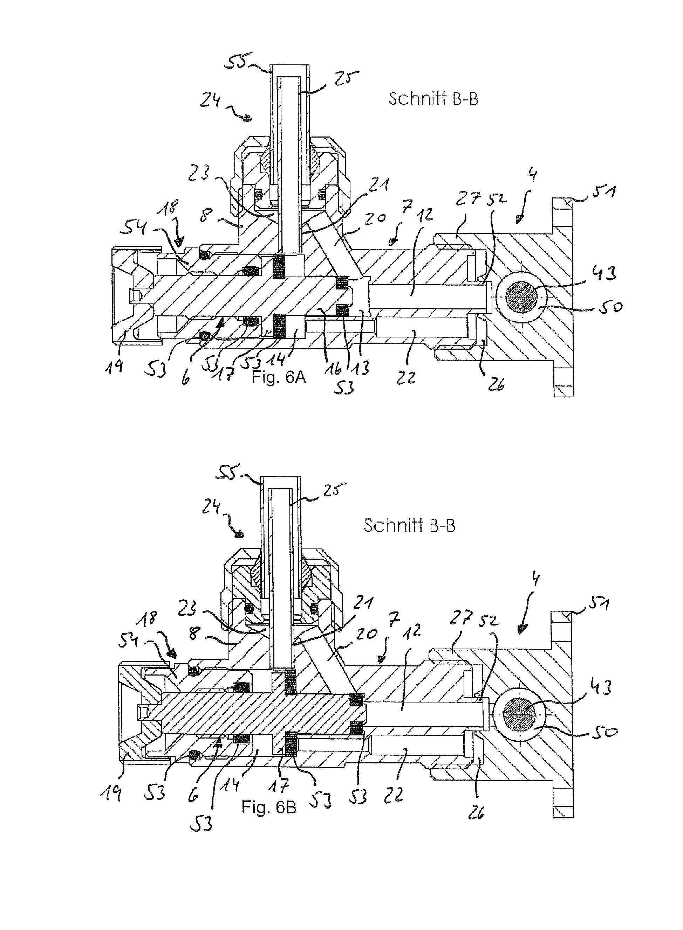

Die in einer Offenstellung der Ventilspindel 6 ausgebildeten Durchflusskanäle kommunizieren mit einen, wie insbesondere in Fig. 4A, 4B, 6A und 6B gezeigt, in den Anschluss 8 führenden ersten Kanal 20 und zweiten Kanal 21, die in einer in dem Anschluss 8 ausgeformten Bohrung 23 und dem innenliegenden Rohr 25 enden. Die Bohrung 23 steht in Verbindung mit dem vom äußeren Rohr 55 und dem innenliegenden Rohr 25 gebildeten Ringspalt.

Der Anschluss 8 ist dergestalt, dass dieser mit einer Verbindungsleitung 24 mittels einer allgemein bekannten Schraubverbindung verbindbar ist. Die Verbindungsleitung 24 ist als Inliner ausgeformt, wobei das innenliegende Rohr 25 von dem zweiten Kanal 21 aufgenommen ist und mit dem bei Offenstellung der Ventilspindel 6 in dem zweiten Durchflussbohrungsabschnitt 14 ausgebildeten Durchflusskanal kommuniziert, wobei das das innenliegende Rohr 25 umgebende äußere Rohr 55 mit dem ersten Kanal 20 strömungstechnisch verbunden ist.

Ein nicht dargestellter Strömungsübergang von der durch das innenliegende Rohr 25 zu der Auslaufarmatur geführten zu der durch das äußere Rohr 55 zurückgeleiteten Strömung erfolgt im Anschlussbereich der Verbindungsleitung 24 mit der Auslaufarmatur. Das innenliegende Rohr 25 wird dabei möglichst nah an die Auslaufarmatur geführt. Eine besondere Aufnahme, beispielsweise zur Zentrierung, ist dabei nicht notwendig: das innenliegende Rohr 25 endet somit an einer bestimmten Stelle und liegt je nach Krümmung des äußeren Rohres 55, an beliebigen Stellen am äußeren Rohr 55 an.

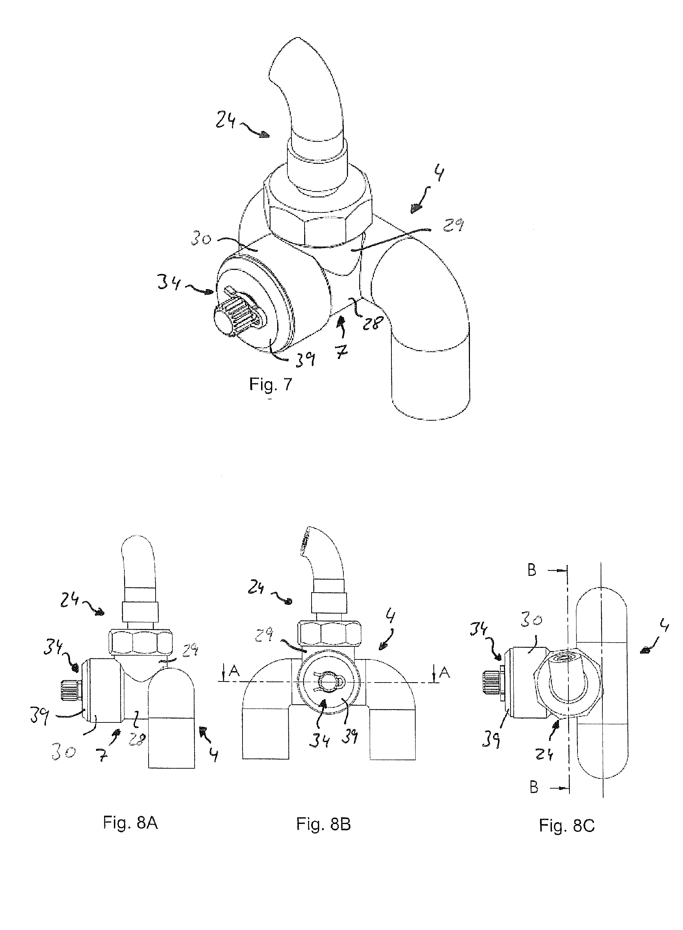

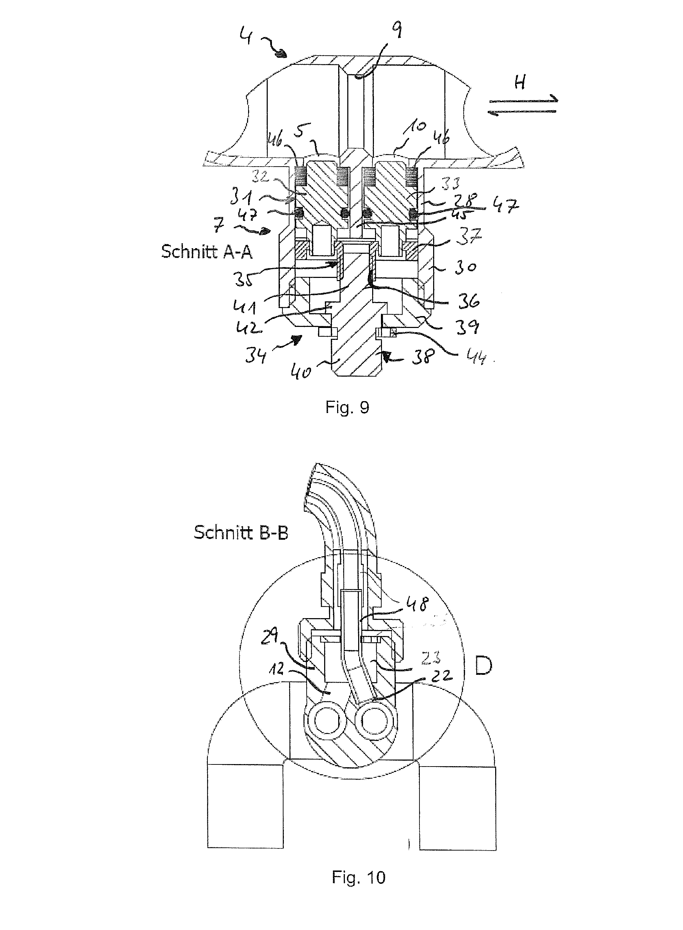

Die Fig. 7 zeigt eine perspektivische Ansicht eines Gehäuseteils eines zweiten Ausführungsbeispiels einer erfindungsgemäßen Armatur. Die Fig. 8A bis 8C zeigen eine Seiten-, Front- und Draufsicht des in Fig. 7 perspektivisch dargestellten Gehäuseteils. Die Fig. 9 zeigt eine Querschnittsansicht des Ausführungsbeispiels entlang der Schnittlinie A-A des in Fig. 8B dargestellten Gehäuseteils. Mit Blick auf das erste Ausführungsbeispiel kennzeichnen die für das zweite Ausführungsbeispiel verwendeten gleichen Bezugszeichen gleiche Bestandteile.

Wie in Fig. 9 dargestellt, umfasst die Armatur eine die Versorgungsleitung ausbildenden Rohrabschnitt 4 und einen davon senkrecht abgehenden und mit dem Rohrabschnitt 4 strömungsmäßig verbundenen ersten Teil 28 des Leitungsabschnittes 7, dem in Abgangsrichtung ein Endabschnitt 30 folgt. Der erste Teil 28 und der Endabschnitt 30 formen den Leitungsabschnitt 7 aus. Der erste Teil 28 des Leitungsabschnittes 7 ragt von dem Rohrabschnitt 4 senkrecht ab und umfasst einen von diesem ersten Teil 28 senkrecht abragenden zweiten Teil 29, der das Anschlussmittel 8 zum Anschließen einer nicht dargestellten Auslaufarmatur über einen dafür vorgesehene Verbindungsleitung 24 umfasst. Der Endabschnitt 30 schließt sich an dem von Rohrabschnitt 4 abgehenden ersten Teil 28 unmittelbar an und nimmt ein ein Ventil-Bedienelement 34 umgebendes Deckelelement 39 auf. Das Ventil-Bedienelement 34 ragt von dem Deckelelement 39 zur Gehäuseaußenseite und ist Gehäuseaußenseitig im Übergangbereich zum Deckelelement 39 beispielsweise mit einen Sicherungssplint 44 wie beispielsweise einen Sicherungssplint ausgestattet.

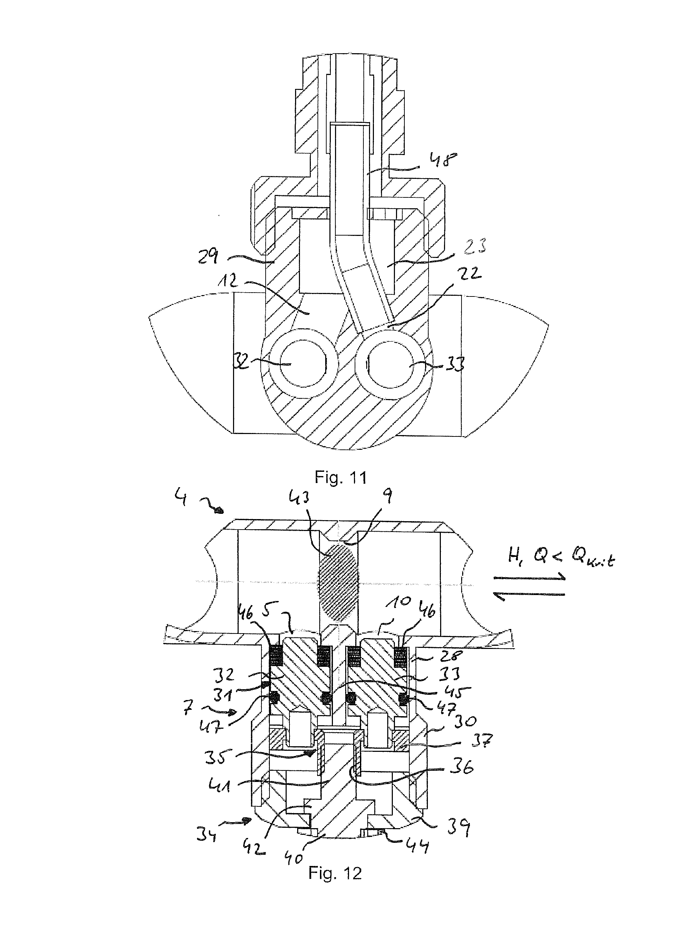

Der in Fig. 9 gezeigte Rohrabschnitt 4 umfasst eine Querschnittsverengung 9 mit zwei der Querschnittsverengung 9 vor- bzw. nachgelagerten Aus- bzw. Einfädelöffnungen 5 und 10. Der Rohrabschnitt 4 ist symmetrisch aufgebaut: die Hauptströmungsrichtung H kann in der Darstellung der Fig. 11 sowohl von links nach rechts als auch von rechts nach links laufen. Somit haben die beiden Öffnungen 5 und 10 sowohl die Funktion einer Ein- als auch die einer Ausfädelöffnung, je nach vorliegender Strömungsrichtung. Die Ein- bzw. Ausfädelöffnungen 5 und 10 weisen einen gleichen Öffnungsdurchmesser auf. Die Ausfädel- und Einfädelöffnung 5, 10 kommunizieren jeweils mit einem in dem ersten Teil 28 des Leitungsabschnitts 7 vorgesehene erste und zweite Durchflussbohrung 12, 22, die zueinander parallel angeordnet sind und durch eine Trennwand 45 voneinander getrennt sind. Der erste Teil 28 geht in den Endabschnitt 30 über, wobei die Trennwand 45 im Bereich des Überganges zum Endabschnitt 30 endet. In der ersten und zweiten Durchflussbohrung 12, 22 ist jeweils ein bewegliches Ventilelement 32, 33 als Komponente eines in dem Leitungsabschnitt angeordneten Doppelabsperrventils 31 vorgesehen.

Die Fig. 9 zeigt insbesondere eine Verschlussstellung des Doppelabsperrventils 31. Die Ventilelemente 32, 33 ragen in die Ein- bzw. Ausfädelöffnungen 5 und 10 derart hinein, dass die Stirnseiten der Ventilelemente 32, 33 mit einer Innenwandung des Rohrabschnitts 4 vorzugsweise plan abschließen. Die Ventilelemente 32, 33 sind von einem ersten und zweiten Dichtungsring 46, 47 umgeben, wobei der erste Dichtungsring 46 in einem der Ausfädel- bzw. Einfädelöffnung 5, 10 nahen Bereich der Ventilelemente 32, 33 und der zweite Dichtungsring 47 in einem mittleren Bereich der Ventilelemente 32, 33 vorgesehen sind, um die erste und zweite Durchflussbohrung 12, 22 gegenüber dem Rohrabschnitt 4 dichtend zu verschließen. Die Ventilelemente 32, 33 sind an ihrem dem Rohrabschnitt 4 abgewandten Ende über eine Platte 37 miteinander verbunden. Die Platte 37 weist eine zentrierte Spindelführung 35 auf, die mit einem spindelartig ausgeformten Schaftteil 41 eines dem Ventil-Bedienelement 34 zugeordneten Drehteils 38 derart zusammenwirkt, dass bei Drehung des Drehteils 38 die Platte 37 in Richtung des Rohrabschnitts 4 oder in Richtung des Drehteils 38 verschoben wird. Die Ventilelemente 32, 33 werden aufgrund ihrer Verbindung mit der Platte 37 in die Bewegungsrichtung der Platte 37 verschoben, womit der Leitungsabschnitt 7 entweder abgesperrt oder geöffnet wird. Die Platte 37 weist einen dem Innendurchmesser des Endabschnitts 30 gleichen Außendurchmesser auf. In einer Verschlussstellung des Doppelabsperrventils 31 kommt die Platte 37 mit einer der Rohrabschnitt 4 abgewandten Stirnseite der Trennwand 45 vorzugsweise derart in Anlage, dass die Verschiebung der Platte 37 in Richtung des Rohrabschnittes 4 begrenzt wird. Der Endabschnitt 30 nimmt das Deckelelement 39 auf, wobei das Deckelelement 39 in den Endabschnitt 30 verschraubt wird. Das Deckelelement 39 umfasst eine zentrierte Bohrung, durch die ein Kopfteil 40 des Drehteils 38 zu der Gehäuseaußenseite der Armatur hinausragt. Das Kopfteil 40 umfasst eine ringförmige Aussparung im Bereich der deckelaußenseitigen Anlagefläche und nimmt einen Sicherungssplint 44 auf. Das Kopfteil 40 geht über einen Kragen 42 in den Schaftteil 41 über. Der Kragen 42 weist einen größeren Durchmesser als das Kopfteil 40 auf und liegt an der Innenseite des Deckelelementes 39 an. Mit dem Kragen 42 und dem Sicherungssplint 44 wird ein axiales Verschieben des Drehteils 38 verhindert.

Die Fig. 10 zeigt eine Schnittansicht des zweiten Ausführungsbeispiels entlang der Schnittlinie B-B des mit Fig. 8C gezeigten Gehäuseteils. Die Fig. 11 zeigt eine vergrößerte Schnittansicht des in Fig. 10 gezeigten Ausführungsbeispiels. Wie in Fig. 11 gezeigt, gehen die ersten und zweiten Durchflussbohrungen 12, 22 über ein in dem zweiten Teil 29 des Leitungsabschnittes 7 jeweils zu diesen Durchflussbohrungen 12, 22 senkrecht verlaufenden und zueinander spitz zulaufenden Durchflussbohrungen 12, 22 über, die in einer in dem zweiten Teil 29 ausgeformten Bohrung 23 enden. Die Bohrung 23 umgibt einen Inliner 48, der mit seinem einen Ende in die Mündung des mit der Ein- bzw. Ausfädelöffnung 10 kommunizierende zweite Durchflussbohrung 22 hineinragt und mit seinem anderen Ende aus dem zweiten Teil 29 des Leitungsabschnitts 7 herausragt. Der herausragende Abschnitt des Inliners 48 ist vorzugsweise koaxial zu der Bohrung 23 angeordnet, wobei die Bohrung 23 einen größeren Innendurchmesser als ein Außendurchmesser des Inliners 48 hat. Der zweite Teil 29 des Leitungsabschnitts 7 weist außenseitig das als Anschlussmittel 8 ausgebildete Außengewinde auf, über welches eine Verbindungsleitung 24 anschließbar ist. Das Anschlussmittel 8 muss nicht zwangsläufig über einen Gewindeeingriff realisiert werden. Als Anschlussmittel können weitere dem Fachmann bekannte als Leitungsanschluss dienende Mittel verwendet werden.

Die Bohrung 23 wird im Bereich des Anschlussmittels 8 über ein Dichtungselement 49 abgedichtet, wobei das Dichtungselement 49 eine zentrierte Bohrung aufweist, die den aus dem Leitungsabschnitt 7 herausragenden Abschnitt des Inliners 48 umgibt. Das Dichtungselement 49 umfasst wenigstens eine weitere Bohrung 56, über welche die den Inliner 48 umgebende Bereiche beidseitig des Dichtungselementes 49, mit anderen Worten der den in der Bohrung 23 den Inliner 48 umgebende Bereich und der innerhalb der Verbindungsleitung 24 den Inliner 48 umgebende Bereich, miteinander verbunden werden.

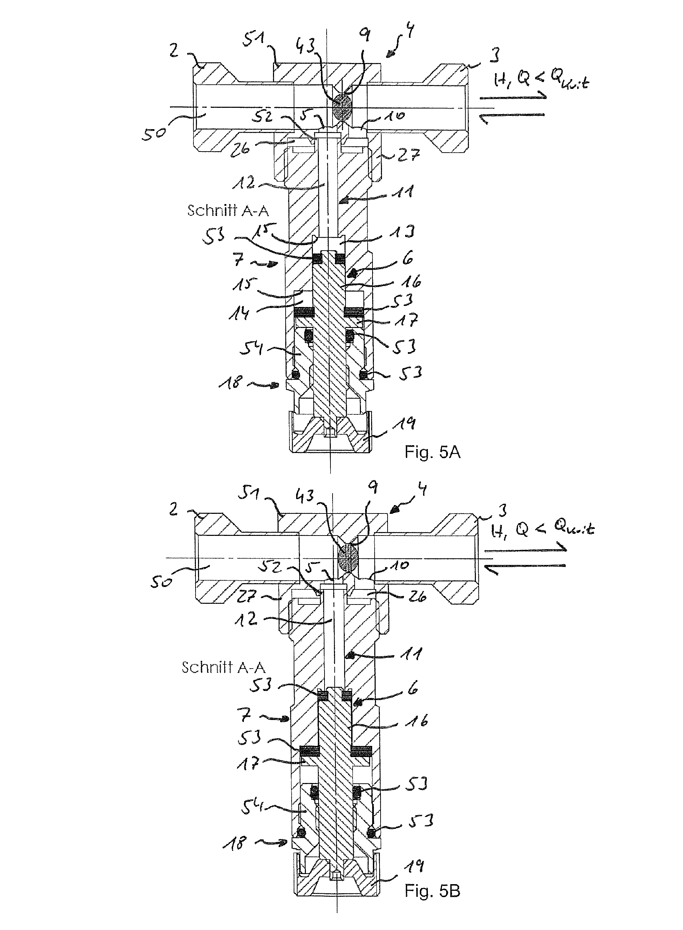

Die Figuren 5A bis 6B zeigen eine Querschnittsansicht entlang der Schnittlinien A-A und B-B des in Fig. 2B gezeigten ersten Ausführungsbeispiels mit einem Verschlusskörper. Die Fig.12 bis 14 zeigen eine Querschnittsansicht entlang der Schnittlinie A-A des in Fig. 8B gezeigten zweiten Ausführungsbeispiels mit einem Verschlusskörper. Der Verschlusskörpers ist in der jeweiligen Querschnittsverengung des Rohrabschnittes angeordnet. Da die übrigen Bestandteile gleich ausgestaltet sind und die gleiche Funktion oder Wirkung aufweisen, wird mit Blick auf die übrigen Bestandteile auf die vorbeschriebenen ersten und zweites Ausführungsbeispiele verwiesen. Gleiche Bezugszeichen kennzeichnen auch hier gleiche Bestandteile.

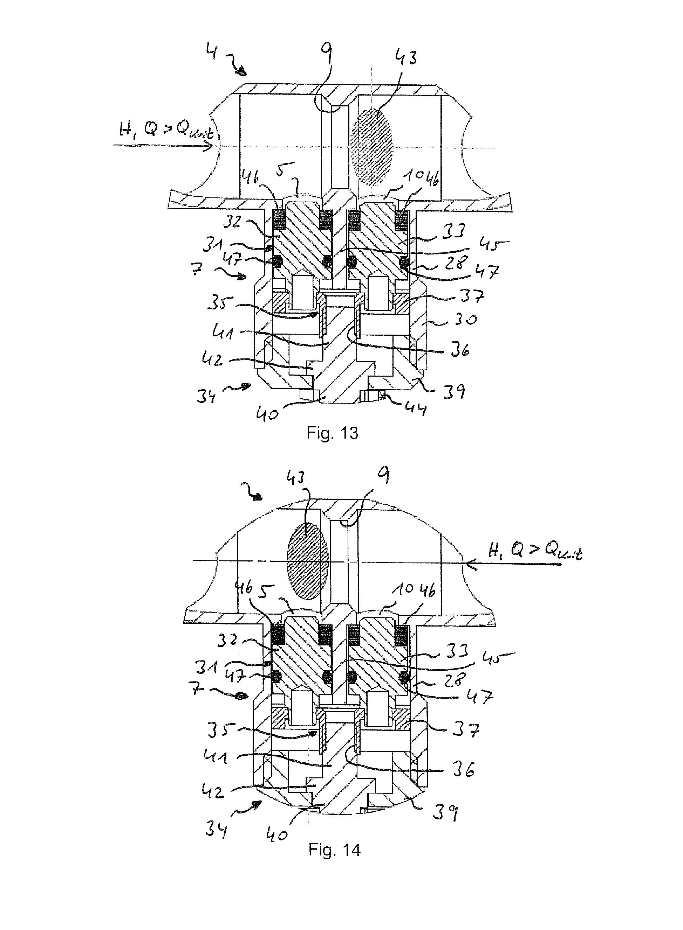

Die Fig. 5A bis 6B und 12 zeigen den Verschlusskörper 43 in einer Verschlussstellung, d.h., in einer nicht ausgelenkten Stellung bei einem in dem Rohrabschnitt 4 herrschenden Volumenstrom Q, der kleiner als ein kritischer Volumenstrom Qₖᵣᵢₜ ist. Der kritische Volumenstrom Qₖᵣᵢₜ korrespondiert insbesondere zu einem Volumenstromwert, bei dem sich der Verschlusskörper 43 gerade noch mittig in der Querschnittsverengung 9 befindet. In dieser zentrischen Stellung ist nur ein minimaler freier Querschnitt zwischen Verschlusskörper 43 und Querschnittsverengung 9 vorhanden. Dieser minimale freie Querschnitt kann auch durch einen nicht dichtenden Kontakt zwischen Verschlusskörper 43 und Querschnittsverengung 9 erreicht werden. Dies liegt in der Tatsache begründet, dass ohne ein zusätzliches Dichtelement immer ein gewisser Leckagevolumenstrom zwischen Verschlusskörper 43 und Querschnittsverengung 9 vorliegt. Soweit ein Volumenstrom Q den kritischen Volumenstrom Qₖᵣᵢₜ übersteigt, verschiebt sich der Verschlusskörper 43, wie insbesondere für das zweite Ausführungsbeispiel in Fig. 13 und 14 gezeigt, derart, dass ein Strömungsdurchtritt zwischen dem Verschlusskörper 43 und einer Innenwandung der Querschnittsverengung 9 möglich wird. Der Verschlusskörper nach dem ersten Ausführungsbeispiel verschiebt sich entsprechend.

Der Verschlusskörper 43 ist rotationselliptisch ausgebildet. Die Hauptachse der Rotationsellipse liegt auf einer in Strömungsrichtung H des Rohrabschnitts 4 verlaufenden Symmetrieachse der Querschnittsverengung 9, entlang welcher der Verschlusskörper 43 verschieblich ist. Der Verschlusskörper 43 ist ferner derart angeordnet, dass in seiner Verschlussstellung, beispielsweise bei Strömungslosigkeit (Q = 0), die Hauptachse der Rotationsellipse auf der Mittelpunktachse der Querschnittsverengung 9 liegt. Der Verschlusskörper 43 weist einen dem Innendurchmesser der Querschnittsverengung 9 nahezu gleichen maximalen Durchmesser auf, so dass der Verschlusskörper 43 die Querschnittsverengung 9 in seiner Verschlussstellung nahezu verschließt. Ein in Strömungsrichtung H des Rohrabschnitts 4 verlaufender Durchmesser des Verschlusskörpers 43 ist im Wesentlichen frei wählbar, vorzugsweise aber dergestalt, dass sich der Verschlusskörper 43 in der Strömungsrichtung H über einen Bereich der Querschnittsverengung 9 in die Bereiche der an die Querschnittsverengung 9 angrenzenden Querschnittserweiterungen erstreckt. An den in Strömungsrichtung H liegenden jeweiligen Enden des Verschlusskörpers 43 greift mindestens eine nicht dargestellte Rückholfeder an. Die Angriffspunkte der Rückholfedern liegen vorzugsweise in der horizontalen Rotationsachse des Verschlusskörpers 43. Die weiteren Enden der Rückholfeder sind mit dem Rohrabschnitt 4 fest verbunden. Die Fixierung der Rückholfedern an dem Rohrabschnitt erfolgt dabei vorzugsweise in einem der Ein- und Ausfädelöffnung 5, 10 vor- bzw. nachgeordneten Bereich, um so eine in die Ausfädelöffnung 5 (oder 10) führende oder eine aus der Einfädelöffnung 10 (oder 5) kommende Strömung nicht zu behindern.

Mit den Fig. 13 und 14 wird insbesondere eine Auslenkung des Verschlusskörpers 43 der erfindungsgemäßen Armatur nach dem zweiten Ausführungsbeispiel in Strömungsrichtung H des Rohrabschnitts 4 gezeigt. Eine Auslenkung des Verschlusskörpers 43 der erfindungsgemäßen Armatur nach dem ersten Ausführungsbeispiel erfolgt entsprechend und wird daher nicht näher insbesondere mit Blick auf das erste Ausführungsbeispiel ausgeführt.

Die gezeigte Auslenkung ist mit einem Volumenstrom Q größer als Qₖₙᵢ erreichbar, so dass ein in den Rohrabschnitt 4 eingeleiteter Volumenstrom Q einerseits in die Armatur ausgeleitet und andererseits an dem Verschlusskörper 43 vorbeigeführt werden kann. Die an den Verschlusskörper 43 angreifenden Rückholfedern erfahren dabei eine solche Auslenkung, dass bei Abnahme des Volumenstromes Q der Verschlusskörper 43 entsprechend in Richtung seiner Ausgangsposition zurückgeholt wird. Als Rückholfedern werden vorzugsweise Zug- und/oder Druckfedern verwendet. Es ist nicht zwingend erforderlich, an jedem Ende des Verschlusskörpers 43 eine Rückholfeder vorzusehen, sondern es können eine beliebige Anzahl an Rückholfedern in einer beliebigen Anordnung in der Armatur vorgesehen werden, solange der Verschlusskörper 43 im Wesentlichen entlang der Strömungsrichtung H von einer Ausgangsposition wie die Verschlussstellung in eine Auslenkposition und wieder zurück bewegbar ist. Die Form des Verschlusskörpers 43 ist ebenfalls nicht auf eine ellipsoide Form eingeschränkt, sondern der Verschlusskörper 43 kann gleichfalls einen parabel- oder kreisförmigen oder einen andersartigen als Verschlusskörper 43 geeigneten Querschnitt aufweisen. Auch der Durchmesser des Verschlusskörpers 43 ist den jeweiligen Umständen entsprechend anpassbar.

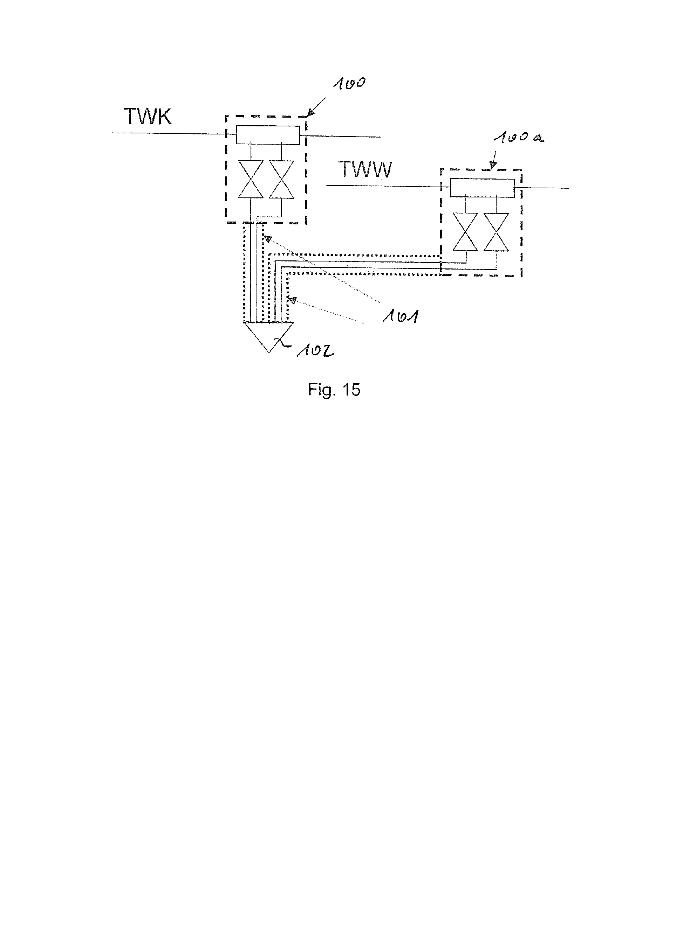

Die Fig. 15 zeigt ein Anschlussbeispiel für die erfindungsgemäße Armatur nach wenigstens einem der vorbeschriebenen Ausführungsbeispiele. Die erfindungsgemäße Armatur 100 ist an eine Trinkwasser-Kaltleitung TWK angeschlossen und verbindet diese über eine als Rohr-in-Rohr ausgebildete Verbindungsleitung 101 mit einer Auslaufarmatur 102. An eine Trinkwasser-Warmleitung TWW ist eine weitere erfindungsgemäße Armatur 100a angeschlossen, die über eine vorbeschriebene Verbindungsleitung 101 die Armatur 100a mit derselben Auslaufarmatur 102 verbindet. Durch den Anschluss der Auslaufarmatur an eine Trinkwasser-Kaltleitung TWK und/oder Trinkwasser-Warmleitung TWW über die erfindungsgemäße Armatur kann auf einfache Weise sichergestellt werden, dass die Verbindungsstrecke zwischen Trink- oder Brauchwasserversorgungsleitung und Auslaufarmatur über die erfindungsgemäße Armatur mit einer kontinuierlichen Strömung versehen ist, wodurch eine Keimbildung in diesem Abschnitt verhindert wird.

### Bezugszeichenliste

- 1, 100, 100a: Armatur
- 2: Einlass
- 3: Auslass
- 4: Rohrabschnitt
- 5: Ausfädelöffnung
- 6: Ventilspindel
- 7: Leitungsabschnitt
- 8: Anschlussmittel
- 9: Querschnittsverengung
- 10: Einfädelöffnung
- 11: Durchflussbohrung
- 12: erste Durchflussbohrung
- 13: erster erweiterter Durchflussbohrungsabschnitt
- 14: zweiter erweiterter Durchflussbohrungsabschnitt
- 15: Anlagefläche
- 16: Schaft
- 17: Kragen
- 18, 34: Ventil-Bedienelement
- 19: Drehgriff
- 20: erster Kanal
- 21: zweiter Kanal
- 22: zweite Durchflussbohrung
- 23: Bohrung
- 24, 101: Verbindungsleitung
- 25: innnenliegendes Rohr
- 26: Ringkanal
- 27: Anschlussstutzen
- 28: erster Teil des Leitungsabschnitts
- 29: zweiter Teil des Leitungsabschnitts
- 30: Ventilaufnahme-Endabschnitt
- 31: Doppelabsperrventil
- 32, 33: Ventilelement
- 35: Spindelführung
- 36: Spindelabschnitt
- 37: Platte
- 38: Drehteil
- 39: Deckelelement
- 40: Kopfteil des Drehteils
- 41: Schaftteil des Drehteils
- 42: Kragen des Drehteils
- 43: Verschlusskörper
- 44: Sicherungselement
- 45: Trennwand
- 46: erster Dichtungsring
- 47: zweiter Dichtungsring
- 48: Inliner
- 49, 53: Dichtungselement
- 50: Durchlass
- 51: Halterung
- 52: Vorsprung
- 54: Ventilhalterung
- 55: äußere Rohr
- 56: weitere Bohrung
- 102: Auslaufarmatur
- H: Strömungsrichtung des Rohrabschnittes
- Q: Volumenstrom
- Qₖᵣᵢₜ: Kritischer Volumenstrom

## Patentansprüche

1. Armatur (1) zum Ausleiten von Trink- oder Brauchwasser aus einer Versorgungsleitung an einen Verbraucher mit einem Einlass (2) und einen Auslass (3) und einem dazwischenliegenden Rohrabschnitt (4) mit einer Ausfädelöffnung (5) und einen von dem Rohrabschnitt (4) abgehenden, mit der Ausfädelöffnung (5) kommunizierenden und mit einem Ventil (6; 31) verschließbaren Leitungsabschnitt (7), welcher in Strömungsrichtung auf der der Versorgungsleitung abgewandten Seite des Ventils (6; 31) Anschlussmittel (8) für den Anschluss einer Auslaufarmatur, insbesondere für einen Waschtisch ausbildet,
**dadurch gekennzeichnet,**
**dass** der Rohrabschnitt (4) eine in Hauptströmungsrichtung der Versorgungsleitung der Ausfädelöffnung (5) nachgeordnete Querschnittsverengung (9) und eine dieser in Hauptströmungsrichtung nachgelagerte Einfädelöffnung (10) umfasst.

2. Armatur nach Anspruch 1, **dadurch gekennzeichnet, dass** der Leitungsabschnitt (7) ausgehend von dem Rohrabschnitt (4) wenigstens zwei voneinander getrennt verlaufende Durchflussbohrungen (12; 22) umfasst, wobei die erste Durchflussbohrung (12) mit der Ausfädelöffnung (5) und die zweite Durchflussbohrung (22) mit der Einfädelöffnung (10) kommuniziert.

3. Armatur nach Anspruch 1 oder 2, **dadurch gekennzeichnet, dass** die Ausfädelöffnung (5) der Querschnittsverengung (9) vorgelagert ist, dass die Einfädelöffnung (10) der Querschnittsverengung (9) nachgelagert ist und dass die Aus- und Einfädelöffnungen (5, 10) derart ausgebildet sind, dass die Strömung aus dem Rohrabschnitt (4) im wesentlichen unter einem Winkel von 90° in den Leitungsabschnitt (7) ausgeleitet bzw. eingeleitet wird.

4. Armatur nach einem der vorherigen Ansprüche, **dadurch gekennzeichnet, dass** der Leitungsabschnitt (7) eine von dem Rohrabschnitt (4) wegführende, sich im wesentlichen stufenartig erweiternde Durchflussbohrung (11) umfasst, die einen die erste Durchflussbohrung ausmachenden Durchflussbohrungsabschnitt (12), der unmittelbar an die Ausfädelöffnung (5) angrenzt, und wenigstens einen sich daran anschließenden ersten erweiterten und danach folgenden zweiten erweiterten Durchflussbohrungsabschnitt (13, 14) aufweist.

5. Armatur nach der vorherigen Ansprüche, **dadurch gekennzeichnet, dass** die Ventilspindel (6) schaftförmig ausgebildet ist und einen von dem Ventilschaft (16) im wesentlichen senkrecht abragenden, in dem Bereich des zweiten erweiterten Durchflussbohrungsabschnitts (14) angeordneten Kragen (17) aufweist, wobei der Schaft (16) einen zu dem Innendurchmesser des ersten erweiterten Durchflussbohrungsabschnitts (13) korrespondierenden Außendurchmesser und der Kragen (17) einen zu dem Innendurchmesser des zweiten erweiterten Durchflussbohrungsabschnitts (14) korrespondierenden Außendurchmesser hat.

6. Armatur nach einem der vorherigen Ansprüche, **dadurch gekennzeichnet, dass** die Ventilspindel (6) über ein mit der Ventilspindel (6) in Eingriff stehendes Ventil-Bedienelement (18) in der Durchflussbohrung (11) axial verschieblich ist, wobei das Ventil-Bedienelement (18) eine außerhalb der Durchflussbohrung (11) angeordnete Einstellvorrichtung (19) hat, mit Hilfe welcher die Ventilspindel (6) wahlweise von einer Offenstellung in eine Verschlussstellung oder umgekehrt verschiebbar ist.

7. Armatur nach einem der vorherigen Ansprüche, **dadurch gekennzeichnet, dass** das Anschlussmittel ein von dem Leitungsabschnitt (7) senkrecht abragender Anschlussstutzen (8) ist, der einen ersten Kanal (20), der mit dem ersten erweiterten Durchflussbohrungsabschnitt (13) kommuniziert, und einen zweiten Kanal (21) aufweist, der mit dem zweiten erweiterten Durchflussbohrungsabschnitt (14) kommuniziert.

8. Armatur nach einem der vorherigen Ansprüche, **dadurch gekennzeichnet, dass** der Rohrabschnitt (4) einen das eine Ende des Leitungsabschnitts (7) aufnehmenden Anschlussstutzen (27) umfasst und dass der Rohrabschnitt (4), der Leitungsabschnitt (7) und die Ventilspindel (6) mit dem Ventil-Bedienelement (18) miteinander mittels Schraub- oder Steckverbindung modular verbunden sind.

9. Armatur nach einem der Ansprüche 1 bis 3, **dadurch gekennzeichnet, dass** die erste und zweite Durchflussbohrung (12, 22) in einem ersten, von dem Rohrabschnitt (4) abgehenden Teil (28) des Leitungsabschnittes (7) zueinander parallel und in einem zweiten, sich dem ersten Teil (28) anschließenden und zu diesem senkrecht verlaufenden zweiten Teil (29) des Leitungsabschnittes (7) zusammenlaufend ausgebildet sind.

10. Armatur nach Anspruch 9, **dadurch gekennzeichnet, dass** der Leitungsabschnitt (7) einen an den ersten Teil (28) anschließenden und dem Rohrabschnitt (4) gegenüberliegenden Ventilaufnahme-Endabschnitt (30) umfasst, welcher das als ein Doppelabsperrventil (31) ausgebildete Ventil aufnimmt, wobei das Doppelabsperrventil (31) jeweils in der ersten und zweiten Durchflussbohrung (12, 22) ein verschieblich geführtes Ventilelement (32, 33) umfasst, die über ein Ventil-Bedienelement (34) verschieblich geführt sind.

11. Armatur nach Anspruch 10, **dadurch gekennzeichnet, dass** die erste und zweite Durchflussbohrung (12, 22) in Richtung des Ventilaufnahme-Endabschnitts (30) offen ausgebildet sind und dass die jeweiligen Ventilelemente (32, 33) in die jeweilige Öffnung hineinragen.

12. Armatur nach Anspruch 11, **dadurch gekennzeichnet, dass** die Ventilelemente (32, 33) auf der Rohrabschnitt (4) abgewandten Seite mit einer den Ventilaufnahme-Endabschnitt (30) verschließenden und koaxial dazu verschieblichen Platte (37) verbunden sind, die eine Spindelführung (35) aufweist, die in Eingriff mit einem in die Spindelführung (35) hineinragenden Spindelabschnittes (36) eines dem Ventil-Bedienelement (34) zugeordneten Drehteils (38) steht, um die Ventilelemente (32, 33) über eine Drehbewegung des Drehteils (38) axial zu verschieben.

13. Armatur nach einem der Ansprüche 9 bis 12, **dadurch gekennzeichnet, dass** der Ventilaufnahme-Endabschnitt (30) auf der dem Rohrabschnitt (4) gegenüberliegenden Seite ein den Ventilaufnahme-Endabschnitt (30) verschließendes Deckelelement (39) aufnimmt, welches eine Bohrung umfasst, durch die ein nach außen führendes Kopfteil (40) des Drehteils (38) ragt, wobei das Kopfteil (40) mit einem den Spindelabschnitt (36) aufnehmenden Schaftteil (41) verbunden ist.

14. Armatur nach Anspruch 12 und 13, **dadurch gekennzeichnet, dass** das Schaftteil (41) und das Kopfteil (40) über einen von dem Schaft- oder Kopfteil (41, 40) radial abragenden Kragen (42) voneinander getrennt werden, wobei der Kragen (42) einen die Bohrung überragenden Außendurchmesser aufweist und mit der der Schaftteil (41) abgewandten Fläche an einer innenseitigen Fläche des Deckelelementes (39) anliegt.

15. Armatur nach einem der vorherigen Ansprüche, **dadurch gekennzeichnet, dass** die Armatur des Weiteren einen in der Querschnittsverengung (9) angeordneten und in Strömungsrichtung (H) des Rohrabschnitts (4) verschieblichen Verschlusskörper (43) umfasst, wobei der Verschlusskörper (43) die Querschnittsverengung (9) bei kleinen Volumenströmen bis zu einem kritischen Volumenstrom (Qₖᵣᵢₜ) im wesentlichen verschließt.
